# EUROPEAN PATENT SPECIFICATION

(11) **EP 4 427 909 B1**
(45) Date of publication and mention of the grant of the patent: **06.05.2026**
(21) Application number: 24161339.7
(22) Date of filing: 05.03.2024
(51) Int. Cl.: B29C 49/00, B29C 49/06, B29C 49/10, B29C 49/02, B29K 67/00, B29K 79/00, B29K 91/00, B29K 105/26, B29K 279/00, B29L 31/00, C08J 3/22, C08K 5/29, C08L 91/06

(54) **METHOD OF PRODUCING BLOW-MOLDED PRODUCT, RESIN COMPOSITION, AND PELLETS**
VERFAHREN ZUR HERSTELLUNG EINES BLASGEFORMTEN PRODUKTS, HARZZUSAMMENSETZUNG UND PELLETS
PROCÉDÉ DE PRODUCTION D'UN PRODUIT MOULÉ PAR SOUFFLAGE, COMPOSITION DE RÉSINE ET PASTILLES

(30) Priority: 06.03.2023 JP 2023033503; 03.10.2023 JP 2023172360
(43) Date of publication of application: 11.09.2024
(73) Proprietor: CANON KABUSHIKI KAISHA, Tokyo 146-8501 (JP)
(72) Inventor: DOI, Yohei, Tokyo, 146-8501 (JP); ASHIBE, Tsunenori, Tokyo, 146-8501 (JP)
(74) Representative: TBK

(56) References cited:
- EP-A1- 2 799 488
- WO-A1-2007/040243
- JP-A- 2009 155 378
- JP-A- 2010 139 697
- JP-B2- 4 771 204
- US-A1- 2009 258 175
- US-A1- 2009 258 982

## Description

### BACKGROUND OF THE INVENTION

### Field of the Invention

The present disclosure relates to a method of producing a blow-molded article.

### Description of the Related Art

In electrophotographic image forming apparatuses, toner bottles that supply, for instance, toner have to be strong enough so as not to break even when dropped; accordingly, molded articles resulting from injection stretch blow molding of polyethylene terephthalate (hereafter also referred to as "PET"), which is a polyester resin, are often used in such toner bottles. Japanese Patent Laid-Open No. 2001-042626 discloses a toner bottle obtained through stretch blow molding.

Recycling of beverage PET bottles as new PET bottles has become widespread in recent years, for the sake of environment protection. Chemical recycling and material recycling are known PET recycling methods, as described in Japanese Patent Laid-Open No. 2014-198422 (paragraphs [0008] and [0009]).

US 2009/258982 A1 relates to a biodegradable resin composition comprising 100 parts by mass of a biodegradable polyester resin such as polylactic acid and 0.1-15 parts by mass of a jojoba oil and/or a polar wax.

EP 2 799 488 A1 relates to a 4-methyl-1-pentene/olefin (co) polymer composition comprising a specific 4-methyl-1-pentene (co)polymer (A) and a specific 4-methyl-1-pentene/α-olefin copolymer (B) in a specific ratio.

US 2009/258175 A1 relates to a foam sheet made of a biodegradable resin composition containing a wax and/or a polyolefin resin, wherein the biodegradable resin is mainly composed of polylactic acid.

WO2007/040243 A1 relates to a biodegradable resin composition comprising a biodegradable polyester resin, a layered silicate, and at least one component selected from a polyether phosphate ester compound, a polar wax and jojoba oil.

JP 2009-155378 A relates to a biodegradable polyester resin composition obtained by melt-kneading 100 pts.mass of biodegradable polyester resin A containing 50 mol.% or more of α- and/or β-hydroxy carboxylic acid unit, 0.01-20 pts.mass of (meth)acrylate compound B having two or more of (meth)acryl group in a molecule, or one or more of (meth)acryl group and one or more of glycidyl group or a vinyl group, and 0.01-20 pts.mass of peroxide C, and contains further 0.1-20 pts.mass of a crystallization retarder D in the resin composition.

JP 4 771204 B2 relates to a polyester resin composition obtained by melt-mixing two or more polyester resins comprising a thermoplastic polyester elastomer resin as an essential component of the component and having 10/90 to 99/1 mass ratio of Ge/Sb contained in the whole composition as the catalyst.

### SUMMARY OF THE INVENTION

Chemical recycling requires a multi-step process as disclosed in Japanese Patent Laid-Open No. 2000-169623, and requires decomposition facilities and polymerization facilities, resulting in high recycling costs. In addition, the environmental burden arising from the chemical recycling is large.

On the other hand, in material recycling, a process of washing bottles is generally performed. However, bottles may be washed a plurality of times using water, acids, alkalis and the like, and a drying process is also required. Therefore, washing bottles can also increase the environmental burden.

Therefore, in order to reduce the environmental burden, the inventors simplified or omitted a process of washing of toner bottles to be recycled, and reproduced toner bottles using PET (hereinafter abbreviated as "MR-PET" for material recycled PET) obtained from toner bottles having toner still attached to the inside thereof. Thus, the inventors found that, when toners were stored in the toner bottles obtained in this manner, the surface of toner particles are sometimes deformed. The deformed toner particles may cause development defects, and development defects may cause density unevenness in electrophotographic images.

At least one aspect of the present disclosure is to provide a method for producing a blow-molded article through which it is possible to prevent wax-derived components from being transferred to a surface of a blow-molded article.

At least one aspect of the present disclosure is to provide a resin composition that contributes to preventing wax-derived components from being transferred to a surface of a blow-molded article.

At least one aspect of the present disclosure is to provide pellets that contribute to preventing wax-derived components from being transferred to a surface of a blow-molded article.

The present invention provides a method for producing a blow-molded article as specified in claims 1 to 10.

According to at least one aspect of the present disclosure, it is possible to obtain a method for producing a blow-molded article through which it is possible to prevent wax-derived components from being transferred to a surface of a blow-molded article.

In addition, according to at least one aspect of the present disclosure, it is possible to obtain a resin composition that contributes to prevention of wax-derived components being transferred to a surface of a blow-molded article.

In addition, according to at least one aspect of the present disclosure, it is possible to obtain pellets that contribute to prevention of wax-derived components being transferred to a surface of a blow-molded article.

Further features of the present invention will become apparent from the following description of exemplary embodiments with reference to the attached drawings.

### BRIEF DESCRIPTION OF THE DRAWINGS

FIG. 1 is a schematic diagram of an image forming apparatus;
FIG. 2 is a schematic diagram illustrating a method for molding a preform;
FIG. 3 is a schematic diagram illustrating a blow molding method;
FIG. 4 is a schematic diagram of one-stage method blow molding.
FIG. 5 is a schematic diagram showing a procedure of transferring a wax component to a surface.
FIG. 6 is a schematic diagram of a blow bottle.
FIG. 7 is an estimated reaction scheme between a wax-derived component and a carbodiimide compound, or a wax-derived component and a carbodiimide compound, and a thermoplastic polyester.

### DESCRIPTION OF THE EMBODIMENTS

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily.

In the present disclosure, for example, descriptions such as "at least one selected from the group consisting of XX, YY and ZZ" mean any of XX, YY, ZZ, the combination of XX and YY, the combination of XX and ZZ, the combination of YY and ZZ, and the combination of XX, YY, and ZZ.

As described above, when toners are stored in toner bottles molded using MR-PET obtained from toner bottles with toner still attached, deformation may occur on the surface of the stored toners. The inventors speculate the reason as follows.

That is, it is thought that a wax comprised in the toner attached to the toner bottle before recycling is mixed into the toner bottle. Moreover, it is thought that at least a part of the mixed in wax is present on the inner surface of the toner bottle molded using MR-PET (hereinafter referred to as an "inner surface"). In addition, it is thought that at least a part of the wax in the preform comprising MR-PET is hydrolyzed by water in air and its hydrolysate is present on the inner surface of the toner bottle after blow molding.

Moreover, it is thought that the surface of toner particles is deformed when the toner stored in the toner bottle comes into contact with the wax or hydrolysate exposed on the inner surface of the toner bottle. Hereinafter, the wax and its hydrolysate will be collectively referred to as a "wax-derived component." In addition, in the present disclosure, deformation on the surface of toner particles due to wax-derived components may be referred to as chemical attack.

In particular, it is thought that transfer of wax-derived components in the preform to the inner surface of the toner bottle is likely to occur during heating in the preform molding process. Immediately after injection molding of the preform, there is almost no difference in the concentration of the wax-derived components present inside the resin of the preform and on the surface of the preform. However, when a preform is stretch-blow-molded, the preform is heated to a glass transition temperature (Tg) of a thermoplastic polyester resin or higher, which is a main material of the preform. Thus, the thermoplastic polyester has high molecular mobility at Tg or higher. On the other hand, for example, the wax generally has a low molecular weight of about 300 to 500, and the hydrolysate of the wax has a very low molecular weight.

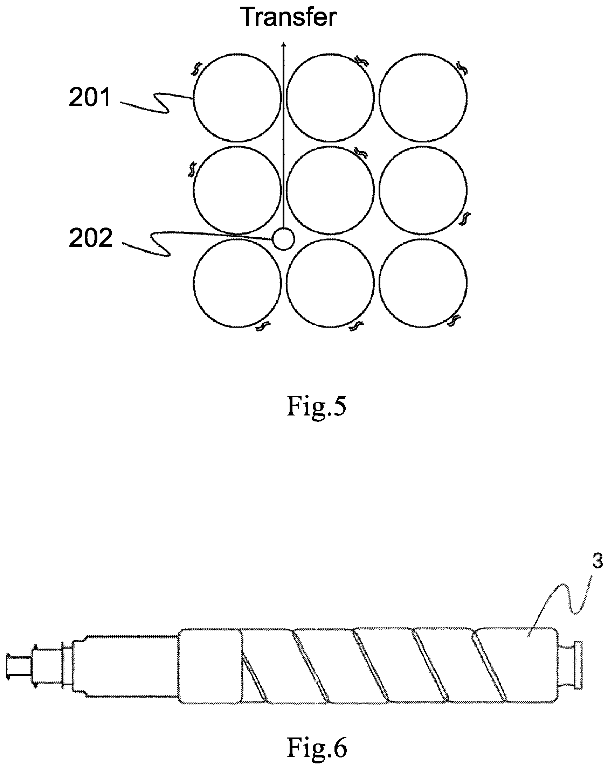

Therefore, it is thought that, when the preform is heated to a Tg of a thermoplastic polyester resin 201 or higher, a low-molecular-weight wax-derived component 202 transfers to the surface including the inner surface of the preform (FIG. 5). As a result, it is thought that more wax-derived components are present on the inner surface of the toner bottle, which is a blow-molded article of the preform.

Based on these considerations, the inventors conducted repeated studies to obtain a blow-molded article that can be used as a toner bottle which can prevent the stored toner from deforming based on the premise of using a thermoplastic polyester recycled from the toner bottle with a toner attached. As a result, it was found that a blow-molded article obtained by a production method for producing a preform from a melt-kneaded product of a resin mixture comprising at least a wax, a thermoplastic polyester and a carbodiimide compound and blow molding the produced preform contributes to addressing the above problems.

The inventors speculate the reason why the blow-molded article of the preform obtained from the melt-kneaded product of the resin mixture contributes to addressing the above problems as follows.

One reason is thought to be that, in the melt-kneaded product of the resin mixture comprising a wax and a carbodiimide compound, as raw materials of the preform, the wax-derived components react with the carbodiimide compound, the wax-derived components become polymerized, and thus the fluidity of the wax-derived components decreases. As a result, it is thought that transfer of the wax-derived components to the surface of the stretch-blow-molded article can be inhibited.

Another reason is thought to be that a thermoplastic polyester, a carbodiimide compound and wax-derived components are bonded via a carbodiimide group. Accordingly, it is thought that the wax-derived components are immobilized in a high-molecular-weight thermoplastic polyester, and transfer of the wax-derived components to the surface of the stretch-blow-molded article is inhibited. As a result, it is thought that, when the blow-molded article is a toner bottle, it is possible to prevent the wax-derived components from being transferred to the inner surface of the toner bottle and it is possible to reduce the occurrence of chemical attack.

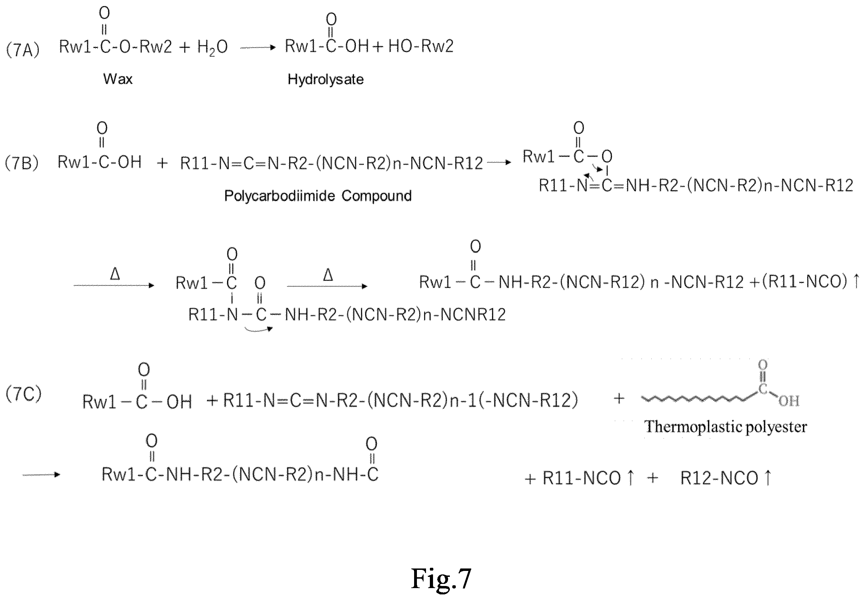

One more possible reason will be described. When the wax is an ester wax, as described above, the ester wax in the preform is hydrolyzed due to water in air, and as shown in FIG. 7A, carboxylic acid as one of the wax-derived components is generated. Then, the generated carboxylic acid transfers to the inner surface of the preform. When this preform is stretch-blow-molded, the transferred carboxylic acid is likely to come into contact with the toner stored in the toner bottle, and as a result, the toner bottle may cause deformation of the toner.

However, when a resin mixture as a raw material for a preform comprises a carbodiimide compound, in a procedure of melt-kneading the resin mixture, as shown in FIG. 7B, a carboxylic acid as a wax-derived component reacts with the carbodiimide compound, and the wax-derived component is relatively polymerized. In addition, as shown in FIG. 7C, a carboxylic acid as a wax-derived component is bonded to a thermoplastic polyester via the carbodiimide compound, resulting in a relatively higher molecular weight.

As a result, it is thought that it is possible to inhibit transfer of wax-derived components to the inner surface of the preform, and in turn, it is possible to inhibit the presence of wax-derived components on the inner surface of the stretch-blow-molded article. As a result, it is possible to produce a toner bottle in which contact between the wax-derived component and the toner stored in the toner bottle can be restrained and deformation of the stored toner can be prevented.

Examples of implementations for carrying out the present disclosure will be explained next in detail with reference to accompanying drawings. However, the scope of the present invention is not limited to the following embodiments. In the explanation that follows, unless noted otherwise, the notation "%" signifies "mass%".

A method of producing a blow-molded article according to one aspect of the present disclosure will be described in detail.

### Preform

A blow-molded article can be produced by blow-molding a preform. The preform is produced from a resin composition that is a melt-kneaded product of a resin mixture comprising at least a wax, a thermoplastic polyester and a carbodiimide compound. Here, "melt-kneading" means applying a shear force when a resin mixture is heated and has fluidity, specifically, for example, when a resin mixture is heated to a temperature equal to or higher than the glass transition temperature of a thermoplastic polyester in the resin mixture, particularly, a temperature equal to or higher than the melting point. Examples of methods of applying a shear force when a resin mixture is melt-kneaded include a method of applying a shear force with a screw while heating a resin mixture using a twin-screw extruder, a method of injection molding a melt of a resin mixture, and a method of extrusion molding a melt of a resin mixture.

More specifically, for example, "melt-kneading" includes applying a shear force when the resin mixture is heated to a temperature equal to or higher than the glass transition temperature of the thermoplastic polyester, more preferably, a temperature equal to or higher than the melting point of the thermoplastic polyester (crystal), and the thermoplastic polyester has fluidity, and at least a part of the wax-derived component melts, or at least a part of the carbodiimide compound melts, or at least a part of the wax-derived component and at least a part of the carbodiimide compound melt. Moreover, "melt-kneaded product" includes those obtained by performing cooling through the above "melt-kneading" process.

The preform can be molded, for example, by injection molding. A molding method will be described below in detail.

### Thermoplastic polyester

The thermoplastic polyester is at least one selected from the group consisting of polyethylene terephthalate (PET) and polyethylene naphthalate (PEN) may be exemplified. The thermoplastic polyester is preferably polyethylene terephthalate.

A carbodiimide compound has at least two carbodiimide groups represented by "-N=C=N-" in the molecule.

As the thermoplastic polyester, for example, a modified thermoplastic polyester obtained by reacting a thermoplastic polyester to be modified (for example, PET, hereinafter also referred to as an "unmodified thermoplastic polyester," or "unmodified PET") with a carbodiimide compound may be used. The modified thermoplastic polyester has at least one carbodiimide group in the molecule. Here, the unmodified PET may be MR-PET or may be virgin material PET in which the molecular weight has not decreased. However, when the unmodified PET is MR-PET made from recycled toner bottles, the effects of the present disclosure become more remarkable. Here, qualitative and quantitative analysis of imide bonds in the modified thermoplastic polyester can be performed, for example, by measurement using FT-IR.

### Polyethylene terephthalate (PET)

Polyethylene terephthalate (PET) is obtained by a condensation reaction or a transesterification reaction between terephthalic acid or its ester-forming derivatives, and 1,2-ethanediol or its ester-forming derivatives. It may be either copolymerized PET or a homopolymer. For example, "TRN-8550FF" (product name, commercially available from Teijin Ltd.) can be used. In addition, a mixture with other resins may be used.

The content of the thermoplastic polyester (for example, PET) in the preform is not particularly limited, and is preferably 80 mass% or more and more preferably 90 mass% or more based on the mass of the preform. In addition, the content is preferably 99.9 mass% or less and more preferably 99.5 mass% or less. For example, preferable examples include a range of 80 to 99.9 mass% and 90 to 99.5 mass%.

### Carbodiimide compound

A carbodiimide compound is a polycarbodiimide having 2 or more carbodiimide groups in the molecule, which is expected to interact (react) with wax-derived components and a thermoplastic polyester with higher efficiency.

Here, the polycarbodiimide compound (R11-(N=C=N-R2)n-N=C=N-R12) exemplified in FIG. 7 has a structure in which n represents an integer of 1 or more, R2 is a divalent residue obtained by removing two isocyanate groups from a diisocyanate compound and has a benzene aromatic ring directly bonded to an NCN group, and the benzene aromatic ring has no substituent or only one substituent at both ortho positions for the position bonding to the NCN group. In addition, R11 and R12 each independently represent a residue of an organic compound having one functional group that can react with an isocyanate group. As such polycarbodiimides, for example, "Carbodilite HMV-15CA" (product name, commercially available from Nisshinbo Chemical Inc.) is available.

In addition, as described above, a modified thermoplastic polyester obtained from a thermoplastic polyester and a carbodiimide compound can be used. For example, modified PET is obtained by reacting PET with a carbodiimide compound as described above.

A polycarbodiimide can be produced by, for example, heating an organic isocyanate in the presence of a catalyst and performing a decarboxylation condensation reaction. Examples of organic isocyanates include aliphatic diisocyanates, alicyclic diisocyanates, and aromatic diisocyanates. Specific examples of polycarbodiimides include, for example, aromatic polycarbodiimides such as poly(4,4'-diphenylmethanecarbodiimide), poly(p-phenylenecarbodiimide), poly(m-phenylenecarbodiimide), poly(diisopropylphenylcarbodiimide), and poly(triisopropylphenylcarbodiimide); and alicyclic polycarbodiimides such as poly(dicyclohexylmethane carbodiimide). These polycarbodiimides may be used alone, and any combination of two or more thereof may be used.

Among these polycarbodiimides, aliphatic polycarbodiimides are preferable because they further lower the density of modified PET. As the aliphatic polycarbodiimides, for example, those commercially available as "Carbodilite HMV-15CA," "Carbodilite LA-1," and "Carbodilite HMV-5CA-LC" (all are product name, commercially available from Nisshinbo Chemical Inc.) can be used.

A carbodiimide is added during the step of producing a preform. For example, a preform can be produced by melt-kneading a wax, a thermoplastic polyester, and a carbodiimide compound.

In order to sufficiently react wax-derived components and a carbodiimide compound, or wax-derived components and a carbodiimide compound, and a thermoplastic polyester, it is preferable to melt-knead a resin mixture comprising MR-PET comprising a wax, and a carbodiimide compound.

For example, it is preferable to cut a resin composition comprising a melt-kneaded product of a resin mixture into pellets and to mold a preform using the obtained pellets. That is, it is preferable to mold a preform using pellets comprising a melt-kneaded product of a resin mixture (resin composition).

In addition, for example, MR-PET comprising a wax is melt-kneaded to form first pellets. Here, separately from a process of forming first pellets, a mixture of a carbodiimide compound and other thermoplastic polyesters is melt-kneaded to form second pellets. Next, the obtained first pellets and second pellets are mixed, and a melt of the pellet mixture can be molded by a method such as injection molding to obtain a preform. Other thermoplastic polyesters used when the second pellets are formed are not particularly limited, and thermoplastic polyesters the same as or different from the thermoplastic polyester comprised in the first pellets can be used.

Since a carbodiimide compound such as a polycarbodiimide has high reactivity, it is preferable to stabilize physical properties of the modified thermoplastic polyester while controlling the amount of the carbodiimide compound added. For example, a carbodiimide compound may be diluted with an unmodified thermoplastic polyester in advance, and melt-kneaded at a temperature equal to or higher than the melting point of the thermoplastic polyester to prepare masterbatch pellets (second pellets). The masterbatch pellets may be mixed with unmodified thermoplastic polyester pellets (first pellets) and melt-kneaded.

The dilution ratio when a carbodiimide compound is diluted with an unmodified thermoplastic polyester in preparing masterbatch pellets is not particularly limited. For example, a carbodiimide compound is diluted preferably 5- to 15-fold and more preferably 10-fold with an unmodified thermoplastic polyester. When the dilution ratio is set to 5-fold or more, the concentration of the carbodiimide compound is within an appropriate range, and unevenness is less likely to occur. In addition, when the dilution ratio is set to 15-fold or less, the amount of the carbodiimide compound used can be kept within an appropriate range without being excessively reduced. In this case, the obtained masterbatch pellets comprise a modified thermoplastic polyester and an unreacted carbodiimide compound.

Next, the masterbatch pellets (second pellets) are mixed with unmodified thermoplastic polyester pellets (first pellets) (pellet blending), the obtained blend is melt-kneaded at a temperature equal to or higher than the melting point of the thermoplastic polyester, and thus the carbodiimide compound and the unmodified thermoplastic polyester can be reacted more uniformly. Here, unlike melt-kneading, pellet blending refers to stirring and mixing a plurality of materials at a temperature at which the resin component does not melt to create a substantially uniform state. Next, pellets (third pellets) comprising a melt-kneaded product of the blend of the first pellets and the second pellets may be obtained and a preform may be molded using a melt of the third pellets.

In addition, without preparing the third pellets, a melt of the blend prepared by uniformly stirring (pellet blending) the first pellets and the second pellets in a blender or the like can be molded into a preform by a method such as injection molding. Here, in the procedure of injection molding of a melt of the blend, a shear force is applied to the melt so that the obtained preform is incorporated into a resin composition comprising the melt-kneaded product according to the present disclosure.

When two types of pellets are uniformly stirred and then molded, the carbodiimide compound and the unmodified thermoplastic polyester PET can be reacted more uniformly.

As a result, it is possible to obtain a more homogeneous modified thermoplastic polyester.

The amount of the carbodiimide compound added with respect to 100 parts by mass of the wax is preferably 400 parts by mass or more, and more preferably 450 parts by mass or more. In addition, the amount is preferably 1,500 parts by mass or less, and more preferably 1,400 parts by mass or less. For example, the range of the amount of the carbodiimide compound added with respect to 100 parts by mass of the wax is preferably 400 to 1,500 parts by mass, and more preferably 450 to 1,400 parts by mass.

In the process of producing a preform, the amount of the carbodiimide compound added with respect to 100 parts by mass of the wax is 227 parts by mass or more. In addition, the amount is 9,096 parts by mass or less and preferably 2,274 parts by mass or less. In the process of producing a preform, for example, the range of the amount of the carbodiimide compound added with respect to 100 parts by mass of the wax is 227 to 9,096 parts by mass and preferably 227 to 2,274 parts by mass.

In the method of forming first pellets and second pellets, in the process of forming second pellets, the amount of the carbodiimide compound added with respect to 100 parts by mass of the wax is preferably 1,364 parts by mass or more. In addition, the amount is preferably 9,096 parts by mass or less and more preferably 2,274 parts by mass or less. In the process of forming second pellets, for example, the range of the amount of the carbodiimide compound added with respect to 100 parts by mass of the wax is preferably 1,364 to 9,096 parts by mass and more preferably 1,364 to 2,274 parts by mass.

When the amount of the carbodiimide compound added is within the above range, wax-derived components can be reacted with the carbodiimide compound more reliably.

When the amount of the carbodiimide compound added with respect to 100 parts by mass of the wax is 227 parts by mass or more, the reaction between the thermoplastic polyester and the wax-derived components sufficiently proceeds. As a result, this is preferable because transfer of the wax-derived components to the surface of the molded article is easily inhibited. In addition, the amount of the carbodiimide compound added with respect to 100 parts by mass of the wax is 9,096 parts by mass or less, since the reaction between the thermoplastic polyester and the wax-derived components is restricted within a range that does not become excessive, the viscosity of the thermoplastic polyester when melted does not become too high and can be kept within an appropriate range. As a result, this is preferable because molding defects due to decreased fluidity of the resin during blow molding are less likely to occur. When the amount of the carbodiimide compound added is within the above range, it is possible to inhibit transfer of the wax to the surface of the molded article while maintaining moldability during blow molding.

As a method of reacting a carbodiimide compound with an unmodified thermoplastic polyester, for example, a method of heating a mixture of a carbodiimide compound or masterbatch pellets comprising a carbodiimide compound, and an unmodified thermoplastic polyester to a temperature equal to or higher than the melting point of the thermoplastic polyester and melt-kneading it using an extruder may be exemplified. The temperature during melt-kneading is not particularly limited, and when PET is used as the thermoplastic polyester, the temperature is preferably at least 250°C or higher and more preferably 260°C or higher.

The wax comprised in the toner is not particularly limited, and waxes that are generally used in the toner may be exemplified. Specific examples of waxes are as follows.

Aliphatic hydrocarbon-based waxes such as low-molecular-weight polyethylenes, low-molecular-weight polypropylenes, polyolefin copolymers, polyolefin waxes, microcrystalline waxes, paraffin waxes, and fischer tropsch waxes; oxides of aliphatic hydrocarbon-based waxes such as oxidized polyethylene waxes; or block copolymers thereof; vegetable-based waxes such as candelilla wax, carnauba wax, Japan wax, and jojoba wax; animal-based waxes such as beeswax, lanolin, and spermaceti; mineral-based waxes such as ozokerite, ceresin, and petrolatum; waxes mainly composed of aliphatic esters such as montanoic acid ester wax and caster wax; and those obtained by partially or completely deacidifying aliphatic esters such as deacidified carnauba wax. In addition, saturated linear fatty acids such as palmitic acid, stearic acid, montanoic acid, and long chain alkyl carboxylic acids with even longer chain alkyl groups; unsaturated fatty acids such as brassidic acid, eleostearic acid, and parinaric acid; saturated alcohols such as stearyl alcohol, eicosyl alcohol, behenyl alcohol, cannavir alcohol, ceryl alcohol, melissyl alcohol, and alkyl alcohols with even longer chain alkyl groups; polyhydric alcohols such as sorbitol; aliphatic amides such as linoleic acid amide, oleic acid amide, and lauric acid amide; saturated aliphatic bisamides such as methylene bisstearamide, ethylene biscapric acid amide, ethylene bislauric acid amide, and hexamethylene bisstearamide; unsaturated fatty acid amides such as ethylene bisoleic acid amide, hexamethylenebisoleic acid amide, N,N'-dioleyladipic acid amide, and N,N'-dioleylsebacic acid amide; aromatic bisamides such as m-xylene bisstearamide, and N,N'-distearylisophthalic acid amide; aliphatic metal salts (generally referred to as metal soap) such as calcium stearate, calcium laurate, zinc stearate, and magnesium stearate; waxes that are grafted onto an aliphatic hydrocarbon-based wax using a vinyl monomer such as styrene or acrylic acid; partial esterification products of fatty acids such as behenic acid monoglyceride and polyhydric alcohols; and methyl ester compounds having hydroxyl groups obtained by hydrogenating vegetable oils and fats. In the waxes exemplified in FIGS. 7A to 7C, Rw1 represents, for example, a hydrocarbon group having 1 to 40 carbon atoms. The hydrocarbon group is typically an alkyl group.

These waxes may be used alone, and any combination of two or more thereof may be used.

Preferably, the wax comprises an ester wax. It is thought that, when the wax is an ester wax, the hydrolysate is likely to transfer to the surface of the preform or the toner bottle, and a component that deforms the toner is obtained. However, according to the method of the present disclosure, the hydrolysate is relatively polymerized according to the reaction with a carbodiimide compound or the hydrolysate is immobilized in the thermoplastic polyester, and thus it is possible to prevent the hydrolysate from being transferred to the surface of the stretch-blow-molded article.

In addition, these waxes of which the molecular weight distribution has been sharped using a press sweating method, a solvent method, a recrystallization method, a vacuum distillation method, a supercritical gas extraction method or a melt crystallization method are preferably used. In addition, those from which low-molecular-weight solid fatty acids, low-molecular-weight solid alcohols, low-molecular-weight solid compounds, and other impurities have been removed are also preferably used.

Specific examples include Viscol (registered trademark) 330-P, 550-P, 660-P, and TS-200 (commercially available from Sanyo Chemical Industries, Ltd.), Hi-Wax 400P, 200P, 100P, 410P, 420P, 320P, 220P, 210P, and 110P (commercially available from Mitsui Chemicals, Inc.), Sasol H1, H2, C80, C105, and C77 (commercially available from Schumann Sasol), HNP-1, HNP-3, HNP-9, HNP-10, HNP-11, and HNP-12 (commercially available from Nippon Seiro Co., Ltd.), Unilin (registered trademark) 350, 425, 550, and 700, Unicid (registered trademark) 350, 425, 550, and 700 (commercially available from Toyo Petrolite Co., Ltd.), Japan wax, beeswax, rice wax, candelilla wax, carnauba wax (commercially available from Cerarica Noda Co., Ltd.).

The stretch-blow-molded article may comprise a colorant as necessary. Examples of colorants include carbon black. The content of the colorant in the stretch-blow-molded article is, for example, 0.01 to 0.20 mass%, or 0.02 to 0.10 mass%.

Next, one aspect of a method for producing a stretch-blow-molded article by performing biaxial stretch-blow molding using a preform will be described below.

The method of producing a stretch-blow-molded article includes the following processes.
(I) a step of producing a preform from a resin mixture comprising at least a wax, a thermoplastic polyester and a carbodiimide compound
(II) a step of producing a stretch-blow-molded article by stretch blow-molding the preform.

(I) a step of producing a preform from a resin mixture comprising at least a wax, a thermoplastic polyester and a carbodiimide compound;

An example of a method of producing a preform from a resin mixture comprising at least a wax, a thermoplastic polyester and a carbodiimide compound is shown.

The step of producing a preform may include a step of melt-kneading a resin mixture comprising at least a wax and a thermoplastic polyester to form pellets. In addition, for example, it may include a step of pulverizing a toner comprising a wax and a toner bottle comprising a thermoplastic polyester, and performing melt-kneading to form pellets. That is, the step of producing a preform may include a process of pulverizing a recycled toner bottle with a toner comprising a wax attached to obtain a pulverized toner bottle product.

For example, a resin mixture comprising a wax, a thermoplastic polyester and a carbodiimide compound may be melt-knead to form pellets. The toner bottle with a toner comprising a wax attached may be pulverized, a carbodiimide compound may be added to the obtained pulverized product, and the mixture may be melt-kneaded to form pellets. The toner bottle comprises a thermoplastic polyester. That is, the step of producing a preform may include a step of melt-kneading a resin mixture comprising at least a toner comprising a wax, a thermoplastic polyester and a carbodiimide compound to form pellets. In addition, the step of producing a preform includes a preform molding process of molding the pellets in the preform. The pellets may be subjected to a drying process and a crystallization process, which will be described below, as necessary.

In addition, as described above, the carbodiimide compound that is diluted in advance with a small amount of an unmodified thermoplastic polyester, and melt-kneaded may be used. For example, a resin mixture comprising a wax and a thermoplastic polyester is melt-kneaded to form first pellets. In addition, for example, a toner bottle comprising a wax and a thermoplastic polyester may be pulverized and melt-kneaded to form first pellets. That is, the step of producing a preform may include a step of pulverizing a recycled toner bottle with a toner comprising a wax attached, and performing melt-kneading to form first pellets.

Then, separately from the step of forming first pellets, a carbodiimide compound and a thermoplastic polyester B are melt-kneaded to form second pellets. The obtained first pellets and second pellets can be mixed, and a pellet mixture can be molded by a method to be described below to produce a preform. That is, the step of producing a preform may include a step of melt-kneading a thermoplastic polyester and a carbodiimide compound to form second pellets. In addition, the step of producing a preform may include a process of mixing the first pellets and the second pellets. The step of producing a preform includes a preform molding process of molding a pellet mixture comprising the first pellets and the second pellets in the preform. The first pellets and the second pellets may be subjected to a drying process and a crystallization process, which will be described below, as necessary.

A device unit for melt-kneading is not particularly limited, and known devices such as a twin-screw extruder may be used. As the twin-screw extruder, for example, "PCM-46" (product name, commercially available from Ikegai Corporation) can be used. The temperature during melt-kneading is not particularly limited, and for example, when the thermoplastic polyester is polyethylene terephthalate, the temperature is preferably 240 to 300°C, and more preferably 260 to 280°C. When melt-kneading is performed, wax-derived components react with the carbodiimide compound, and transfer of the wax-derived components to the surface of the stretch-blow-molded article can be inhibited.

The method may include a step of heating and drying the pellets after pellets are formed by melt-kneading. In addition, the method may include a step of crystallizing the pellets before the drying process. When the crystallization step is performed, adhesion between pellets in the drying process is inhibited and handling during molding becomes easier. The pellets are crystallized, for example, by maintaining them in a specific temperature range. The pellets can be crystallized by maintaining them under conditions of preferably 100 to 180°C and more preferably about 130 to 170°C and preferably 1 to 12 hours and more preferably about 3 to 7 hours.

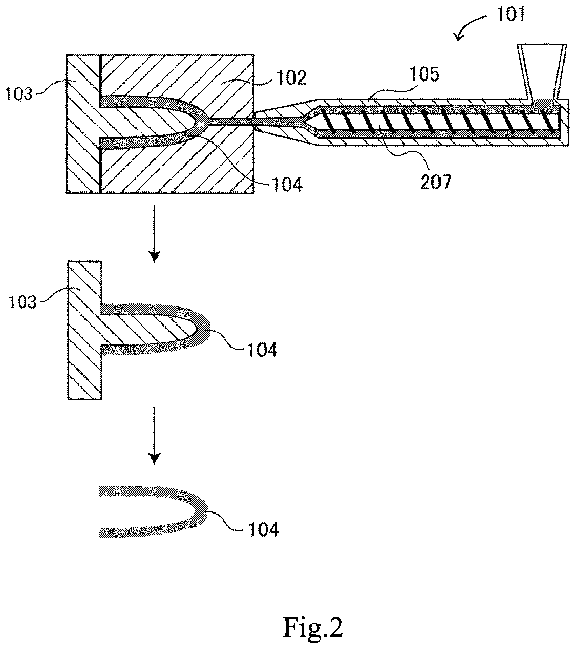

The pellets obtained in the above step are molded to produce a preform. As shown in FIG. 2, a preform 104 having a test tube shape is molded by injection molding. Specifically, a heating cylinder 105 heats materials put into an injection molding machine 101 into a molten state, and an extrusion screw 207 injects the molten materials into preform molds 102 and 103, and removes them from the mold after cooling, and thereby the preform 104 is obtained. In the preform molding step, it is preferable to mold the preform by injection molding. That is, the preform molding step preferably includes a step of injection molding a melt of pellets. In addition, the preform preferably has a test tube shape. In the preform molding step, when raw materials melt, the wax is hydrolyzed. When wax-derived components are reacted with the carbodiimide compound, the wax-derived components are easily immobilized. In addition, it is thought that the reaction between the wax-derived components, the carbodiimide compound, and the thermoplastic polyester is further promoted.

(II) a step of producing a stretch-blow-molded article by stretch blow-molding the preform;

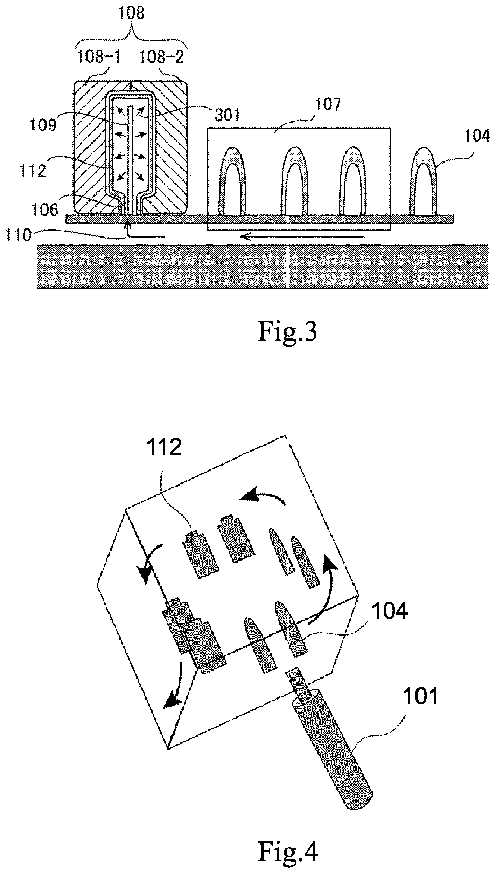

Next, a step of producing a stretch-blow-molded article by stretch blow-molding the preform will be described. As shown in FIG. 3, biaxial stretch-blowing (biaxially stretch-molding) of the preform 104 is performed. First, the preform 104 is put into a heating furnace 107 and heated to a temperature at which it can be stretched. The heating time in this case is not particularly limited, and is preferably within 3 minutes. When the heating time is within 3 minutes, it is possible to prevent crystallization of the crystalline polyester within the preform during heating. When the preform is heated in the process of producing a blow-molded article, the wax-derived components are easily immobilized in the high-molecular-weight thermoplastic polyester. In addition, it is thought that the reaction between the wax-derived components, the carbodiimide compound, and the thermoplastic polyester is further promoted.

The heated preform 104 is removed from the heating furnace 107, and placed at an opening of a blow mold 108. Inside the blow mold 108, a cavity is formed by combining a left side mold 108-1 and a right side mold 108-2.

Preferably the heated preform is placed at the mouth of the blow mold within a short time (for instance within 10 seconds), so that the temperature of the heated preform does not drop before the start of a biaxial stretching step. The progress of crystallization of the crystalline polyester within the preform, derived from gradual cooling of the preform, can be arrested thereby.

The heated preform placed in the blow mold 108 is stretched using a stretching rod 109 in the longitudinal direction of the preform. This is called primary stretching. In the primary stretching, it is preferable to introduce a gas so that the preform 104 does not come into contact with the stretching rod 109. The pressure of the gas in this case is called a primary blow pressure.

After the primary stretching is performed, a gas 110 is introduced from a preform opening 106, and the preform is stretched in a lateral direction (a circumferential direction, that is, a direction intersecting the stretching rod 109). This is called secondary stretching. In addition, the pressure of the gas in this case is called a secondary blow pressure. Examples of gases introduced during the primary stretching and the secondary stretching include air, nitrogen, carbon dioxide, and argon.

When these primary stretching and secondary stretching are performed, the preform 104 expands in directions shown by an arrow 301, comes into close contact with the inner wall of the blow mold 108, and cools and solidifies in that state, and a blow-molded article 112 is produced. The molding step preferably includes a step of stretching the preform in a longitudinal direction of the preform using a stretching rod and a step of introducing a gas into the preform stretched in the longitudinal direction and stretching the preform in a circumferential direction.

The blow-molded article 112 is then retrieved, from the blow mold 108, by separating the left die 108-1 and the right die 108-2 of the blow mold 108. The blow-molded article 112 is stretched both longitudinally and transversally, and hence is a high-strength molded article.

In the stretching step of injection stretch-blow-molding, the preform is preferably in a non- crystalline state (non-crystalline, that is, an amorphous state). If the preform is maintained at the blow molding temperature in an amorphous state, it can be directly blown, that is, biaxially stretch-molded, to stretch and crystallize the PET in the stretching direction, and a high-strength bottle can be formed.

Injection stretch blow molding methods include a single-stage method and a two-stage method. The single-stage method is a method in which residual heat from the preform immediately after retrieval from the mold is exploited to carry out stretch blow molding, as-is or with temperature control. The two-stage method is a method in which the preform is cooled down to room temperature, after which the temperature of the preform is adjusted again, whereupon stretch blow molding is carried out.

That is, the step of molding pellets to produce a preform and the molding step of stretch-blow-molding the preform to produce a stretch-blow-molded article may be performed continuously while maintaining the temperature of the preform. In addition, after the step of molding pellets to produce a preform, a molding step in which the preform is once cooled to room temperature and then stretch-blow-molded to mold a stretch-blow-molded article may be performed.

FIG. 4 shows a schematic diagram of the one-stage method. In the one-stage method, after the preform 104 is injection-molded from the injection molding machine 101, cooling during injection molding is performed for a short time of 10 seconds or shorter so that the preform 104 does not reach the glass transition temperature of PET or lower. Then, immediately, heat retention at a blow molding temperature (for example, 90 to 120°C) is performed, and heating and blow molding are performed to produce the blow-molded article 112 in the method. In the one-stage method, a device in which an injection molding device and a blow molding device are integrated is used.

The two-stage method is a method in which a preform is injection-molded and then cooled to a temperature equal to or lower than the glass transition temperature of PET and removed, and it is then heated to a blow molding temperature (for example, 90 to 120°C) in a separate blow molding device and subjected to blow molding. In the two-stage method, an injection molding device and a blow molding device are not integrated, but are each independently used.

The injection stretch-blow-molding method can be appropriately selected depending on components comprised in the preform and the like. The one-stage method is preferable in that it requires less energy for reheating than the two-stage method because it does not include a process of cooling the preform to a glass transition temperature or lower.

The crystallization temperature of PET is about 130 to 200°C.

Next, a method of checking chemical attack in the toner stored in the toner bottle obtained by biaxial stretch-blow molding will be described.

The toner is stored in the toner bottle obtained by biaxial stretch-blow molding. The toner bottle containing the toner is left under a usage environment. In the chemical attack evaluation according to the present disclosure, the usage environment is set at 50°C for 72 hours, and the toner bottle is left in a thermostatic chamber for testing. The toner bottle left under a usage environment is removed, and out of the toner stored in the toner bottle, only the toner attached to the inner surface of the bottle is removed and observed under an electron microscope.

In the present disclosure, after the toner is discharged from the bottle with the opening of the toner bottle facing downward, the toner attached to the inner surface of the bottle is attached to an adhesive tape, and only the toner attached to the inner surface of the bottle is removed.

When deformation on the surface of toner particles of the toner attached to the inner surface of the bottle is observed under an electron microscope, in the toner particles in which chemical attack has occurred, deformed parts can be observed on the surface in contact with the toner bottle. The deformed parts on the surface in contact with the toner bottle can be identified by the fact that they have less irregularities than surrounding areas in an image observed under an electron microscope.

### Image forming device

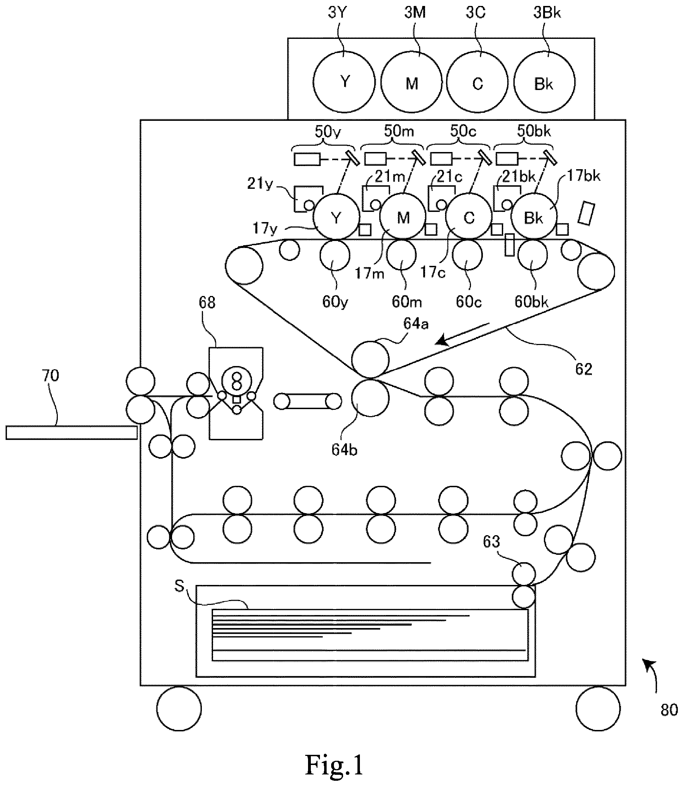

Hereinafter, an image forming device using a toner storage bottle obtained by the production method of the present disclosure will be described with reference to the drawings. FIG. 1 is a schematic configuration illustrative diagram showing a four-color image forming device using an electrophotographic method, and 80 in the drawing indicates a main body of the image forming device. An image forming device 80 is configured as a so-called intermediate transfer tandem type image forming device in which four-color image forming units are arranged side by side on an intermediate transfer belt.

The image forming device 80 performs image formation as follows. First, in the image forming device 80, an electrostatic latent image is formed on a photosensitive drum 17 (17y, 17m, 17c, 17bk) by an exposure device 50 (50y, 50m, 50c, 50bk) based on print data. Then, the formed electrostatic latent image is developed by a development device 21(21y, 21m, 21c, 21bk) to form a toner image.

The toner image is transferred onto an intermediate transfer component 62 by a primary transfer device 60 (60y, 60m, 60c, 60bk), and is transferred onto a sheet material S supplied from a paper-feeding device 63 in a secondary transfer unit 64 (64a, 64b). Next, the toner image transferred onto the sheet S is fixed onto the sheet material S by a fixing device 68 and then discharged onto a paper discharge tray 70.

In the image forming device 80, as described above, a toner image is formed by developing it in the development device 21. In this case, in order to supply the toner to the development device 21, a detachable toner bottle 3 (3Y, 3M, 3C, 3Bk) can be used. The toner bottle produced by the production method of the present disclosure is a toner bottle used in this manner.

### Examples

The present disclosure will be described in detail next on the basis of examples and comparative examples. However, the present disclosure is not limited to these examples.

In the following examples and comparative examples, unless otherwise specified, "%" means "mass%."

### Production of a Toner Bottle

A toner bottle 3 (total length 439.5 mm, diameter 101 mm) illustrated in FIG. 6 was produced using a single-stage blow molding apparatus (ASB-70DPH by Nissei ASB Machine Co., Ltd.). The blow stretching ratio was set to "longitudinal stretch factor × transversal stretch factor = 6.7".

The "longitudinal stretch factor" of the blow stretching ratio is a value calculated by dividing the "total length after stretching" by the "total length (before stretching) of the portion of the preform (heated portion) that reaches the stretching temperature".

The "transversal stretch factor" of the blow stretching ratio is a value calculated by dividing the "diameter of the intermediate portions after stretching" by the "diameter (before stretching) of the intermediate portion of the preform".

Firstly the materials given in Table 1 below were melt-kneaded and pelletized, to produce to Masterbatch having a carbon black concentration of 5 mass%.

**[Table 1]**

| Material | Mixing ratio |
|---|---|
| Carbon black | 5 mass% |
| (product name: MA-100; by Mitsubishi Chemical Corporation) | |
| PET | 95 mass% |
| (product name: TRN-8550FF; by Teijin Ltd.) | |

Next, Masterbatch having a carbon black concentration of 5 mass%, prepared above, and PET, were mixed in the proportions given in Table 2 below, and were melt-kneaded and subsequently pelletized, to yield pellets of the resin mixture. The obtained pellets were dried at a temperature of 150°C for 5 hours.

**[Table 2]**

| Material | Mixing ratio |
|---|---|
| Masterbatch with 5 mass% of Carbon black concentration | 1.4 mass% |
| PET | 98.6 mass% |
| (product name: TRN-8550FF; by Teijin Ltd.) | |

### Blow molding conditions

The resin mixture pellets dried above were put into an extrusion molding device of a one-stage type blow molding device (product name: ASB-70DPH; commercially available from Nissei Asb Machine Co., Ltd.), and biaxial stretch-blow molding was performed to mold a toner bottle. Here, the one step stretch-blow-molding machine could perform a step of producing a preform having a test tube shape by injection molding and a step of biaxial stretch blow-molding the preform to produce a molded product having a bottle shape continuously. In addition, the screw diameter of the injection molding machine in the molding machine was 54 mm.

As a preform molding mold there was prepared first a mold capable of molding a preform having an outer diameter of 30 mm, a wall thickness of 3.7 mm, and a length of 220 mm. A preform was then molded under the following molding conditions.
- Screw diameter: 54 mm
- Screw position prior to filling of resin mixture into cavity: 95 mm
- Injection speed
   Up to 5 mm of screw advance: 50% of maximum speed
   Up to 20 mm of further screw advance: 30% of maximum speed
   Up to 35 mm of further screw advance: 25% of maximum speed
   PV switch position: 35 mm
- Injection pressure
   - Up to PV switch: 12.0 MPa
   - After PV switch: 4.5 MPa (pressure holding)
- Pressure holding time after PV switch
   - 4.57 seconds
- Heating cylinder temperature: 280°C
- Cooling time: 8.0 seconds
- Mold temperature: 18°C

Once a cooling time of 8.0 seconds had elapsed, the preform was thereafter demolded and was conveyed to a biaxial stretch blow station of the one-step stretch blow molding machine. The temperature of the preform during conveyance was controlled as follows.

### - Preform heating temperature

10% of the total length of the preform from the top thereof: 180°C
25% of the total length of the preform from the top thereof: 200°C
50% of the total length of the preform from the top thereof: 200°C
75% of the total length of the preform from the top thereof: 180°C

Next, the preform adjusted to the above temperature was put into a cylindrical mold having a size corresponding to the size of the toner bottle and adjusted to a temperature of 18°C, and biaxial stretch-blow molding was performed to produce a blow bottle. The temperature of the preform during transportation was controlled by heating, and the surface temperature of the center of the preform immediately before it was put into the cylindrical mold was 100°C.

First, a stretching rod at a retreating position was inserted into the preform through the opening of the preform and was advanced until it came into contact with the top of the preform. Next, the air pressure at which the stretching rod was driven was set to 1.2 MPa, and the stretching rod was further advanced. Next, 0.5 seconds after further advancement of the stretching rod started, primary air was introduced into the preform through the opening of the preform. The pressure of the primary air was 1.0 MPa.

Next, secondary air was introduced 0.15 seconds after the primary air was introduced. The pressure of the secondary air was 2.9 MPa. Then, air was introduced into the preform for 7.0 seconds from when introduction of the primary air started. Next, the pressure in the preform was returned to atmospheric pressure over 2.5 seconds. Accordingly, a toner bottle was produced by blow molding. This bottle was a toner bottle comprising virgin PET that has not been recycled. By the above method, 200 toner bottles comprising virgin PET were prepared.

### Example 1

### Production of recycled pellets

All the 200 toner bottles comprising virgin PET prepared above were filled with a black toner stored in an electrophotographic toner bottle (product name toner NPG-67; commercially available from Canon Inc.). The black toner comprised 6.9 parts by mass of an ester wax with respect to 100 parts by mass of the toner. Next, the black toner filled into the toner bottle comprising virgin PET was discharged through the opening of the toner bottle facing vertically downward. Even after this operation, the black toner was still attached to the inner wall of each toner bottle.

The amount of the black toner remaining in the toner bottle in this case was 0.321 mass% (an average value of the 200 toner bottles) based on the mass of the main body of the toner bottle (the PET toner bottle from which supply parts and the like attached to the bottle were removed, and only the toner remained on the inner surface, hereinafter the same applies).

Next, the 200 toner bottles with the toner remaining therein prepared above were pulverized using a pulverizing machine into a size of about 5 to 10 mm square to obtain a pulverized product (hereinafter referred to as a flake product). This flake product was melt-kneaded using a twin-screw extruder (PCM-46 commercially available from Ikegai) at a temperature of 260°C, a screw rotational speed of 200 rpm, a vent degassing of -0.08 MPa, and a discharge rate of 50 kg/h and then pelletized. The pellets were maintained at a temperature of 150°C for 5 hours to crystallize molding pellets, and recycled pellets (first pellets) were obtained. The obtained recycled pellets were set as MR-PET (1-1).

### Production of blow bottle

A polycarbodiimide compound was added to MR-PET (1-1), and using the above one step stretch-blow-molding machine, biaxial stretch-blow molding was performed under the same blow molding conditions as above. Here, the polycarbodiimide compound was diluted and prepared in advance as masterbatch pellets so that they were easily uniformly stirred in a blender. Specifically, the polycarbodiimide compound and PET were mixed at a ratio shown in Table 3, melt-kneaded and then pelletized to prepare polycarbodiimide masterbatch pellets (second pellets).

**[Table 3]**

| Material | Mixing ratio |
|---|---|
| Polycarbodiimide compound | 10.0 mass% |
| (product name: Carbodilite HMV-15CA; Nisshinbo Chemical Inc.) | |
| PET | 90.0 mass% |
| (product name: TRN-8550FF; by Teijin Ltd.) | |

Before materials were put into the molding machine, 3.0 mass% of polycarbodiimide masterbatch pellets (second pellets) were added to MR-PET (1-1) (first pellets), and uniformly stirred in a blender to form a pellet mixture. Since the polycarbodiimide masterbatch pellets were diluted in a proportion shown in Table 3, the polycarbodiimide was comprised in a substantial proportion of 0.3 mass%.

The pellet mixture stirred in a blender was put into the blow molding machine, and biaxial stretch-blow-molded under the same blow molding conditions as above. The obtained toner bottle was a toner bottle (1-1). The toner was stored in the toner bottle (1-1) and left under a usage environment at 50°C for 72 hours. Then, the toner attached to the inner surface of the toner bottle was removed, and the surface of toner particles was observed under an electron microscope. As a result, no deformation on the surface of the toner particles was observed and it was confirmed that no chemical attack occurred.

**[Table 4]**

| | Molded article | Mixing ratio (mass%) | | Actual amount of polycarbodiimide added (mass%) | Content of polycarbodiimide with respect to 100 parts by mass of wax in resin mixture (parts by mass) | Chemical attack |
|---|---|---|---|---|---|---|
| | | MR-PET (1-1) | Polycarbodiimide masterbatch | | | |
| Example 1 | Toner bottle (1-1) | 97.0 | 3.0 | 0.3 | 1364.0 | Not occurred |

In the toner bottle (1-1), the toner bottle was pulverized and melt-kneaded to form first pellets, before they were put into the molding machine, and mixed with polycarbodiimide compound second pellets (masterbatch pellets) prepared in advance.

### Example 2

### Production of recycled pellets

In the same manner as in Example 1, 200 toner bottles using virgin PET with the black toner remaining therein were prepared. The amount of the black toner remaining in the toner bottle was 0.321 mass% (an average value of 200 toner bottles) based on the mass of the main body of the toner bottle.

Next, the 200 toner bottles prepared above and with the toner remaining therein were pulverized into a size of about 5 to 10 mm square using a pulverizing machine to obtain a flake product. 0.3 mass% of a polycarbodiimide (product name: Carbodilite HMV-15CA; commercially available from Nisshinbo Chemical Inc.) was uniformly added to this flake product, the mixture was melt-kneaded using a twin-screw extruder (PCM-46 commercially available from Ikegai) at a temperature of 260°C, a screw rotational speed of 200 rpm, a vent degassing of -0.08 MPa, and a discharge rate of 50 kg/h and then pelletized. The polycarbodiimide used here was in the form of a powder, and not masterbatch pellets. The pellets obtained by melt-kneading were maintained at a temperature of 150°C for 5 hours, and molding pellets were crystallized to obtain recycled pellets. The obtained recycled pellets were used as MR-PET (2-1).

### Production of blow bottle

MR-PET (2-1) was put into the above one step stretch-blow-molding machine and biaxial stretch-blow-molded under the same blow molding conditions as above. Since a polycarbodiimide was added during the procedure of extruding MR-PET (2-1), unlike Example 1, when materials were put into the blow molding machine, no polycarbodiimide was added. The obtained toner bottle was used as a toner bottle (2-1).

The toner was stored in the toner bottle (2-1) and left under a usage environment (50°C, 72 hours), and the environment test was performed. The toner attached to the inner surface of the toner bottle after the test was observed by the above method, and as a result, no deformation on the surface of the toner particles was observed and it was confirmed that no chemical attack occurred.

### Examples 3 and 4

MR-PET (2-2) and (2-3) pellets were prepared in the same manner as in MR-PET (2-1) in Example 2 except that the formulation proportion of the polycarbodiimide was changed as shown in Table 5.

**[Table 5]**

| Material | Mixing ratio (mass%) | |
|---|---|---|
| | Flake product | Polycarbodiimide |
| MR-PET (2-1) | 99.7 | 0.3 |
| MR-PET (2-2) | 99.8 | 0.2 |
| MR-PET (2-3) | 99.9 | 0.1 |

The obtained pellets were biaxial stretch-blow-molded under the same conditions as in Example 2 to obtain toner bottles (2-2) and (2-3). The toner was stored in each bottle and deformation on the surface of toner particles of the toner attached to the inner surface of the toner bottle after being left at 50°C for 72 hours was observed. The toner bottle (2-2) was evaluated as Example 3, and the toner bottle (2-3) was evaluated as Example 4.

As a result, in Examples 3 and 4, no deformation on the surface of the toner particles was observed and it was confirmed that no chemical attack occurred.

In the process in Example 2, that is, in the method in which a polycarbodiimide was added to flakes obtained by pulverizing a toner bottle with a toner comprising a wax attached and melt-kneading was performed to form pellets, it was confirmed that, even if the amount of polycarbodiimide added was 0.1 mass%, the occurrence of chemical attack could be reduced. This was thought to be due to the fact that, when a polycarbodiimide was added in the process of performing melt-kneading in an extruder to form pellets, it could be kneaded with MR-PET more uniformly, and even if a small amount was added, the carbodiimide and the wax-derived components were sufficiently reacted. As a result, it was thought that it was possible to prevent wax-derived components from being transferred to the inner surface of the toner bottle and it was possible to reduce the occurrence of chemical attack.

**[Table 6]**

| | Molded article | Material | Amount of polycarbodiimide added (mass%) | Content of polycarbodiimide with respect to 100 parts by mass of wax in resin mixture (parts by mass) | Chemical attack |
|---|---|---|---|---|---|
| Example 2 | Toner bottle (2-1) | MR-PET (2-1) | 0.3 | 1364 | Not occurred |
| Example 3 | Toner bottle (2-2) | MR-PET (2-2) | 0.2 | 910 | Not occurred |
| Example 4 | Toner bottle (2-3) | MR-PET (2-3) | 0.1 | 455 | Not occurred |

As described above, in the toner bottles (2-1), (2-2) and (2-3), in the process of pulverizing a toner bottle and melt-kneading it to form pellets, a polycarbodiimide was added.

### Comparative Example 1

### Production of recycled pellets

In the same manner as in Example 1, 200 toner bottles using virgin PET with the black toner remaining therein were prepared. The amount of the black toner remaining in the toner bottle was 0.321 mass% (an average value of 200 toner bottles) based on the mass of the main body of the toner bottle.

Next, the 200 toner bottles prepared above and with the toner remaining therein were pulverized into a size of about 5 to 10 mm square using a pulverizing machine to obtain a flake product. This flake product was melt-kneaded at a temperature of 260°C, a screw rotational speed of 200 rpm, a vent degassing of -0.08 MPa, and a discharge rate of 50 kg/h and then pelletized. During melt-kneading, no polycarbodiimide compound was added. The pellets obtained by melt-kneading were maintained at a temperature of 150°C for 5 hours, and molding pellets were crystallized to obtain recycled pellets. The obtained recycled pellets were used as MR-PET (2-4).

### Production of blow bottle

MR-PET (2-4) was put into the above one step stretch-blow-molding machine and biaxial stretch-blow-molded under the same blow molding conditions as above. The obtained toner bottle was used as a toner bottle (2-4).

The toner was stored in the toner bottle (2-4) and left under a usage environment (50°C, 72 hours), and the environment test was performed. The toner attached to the inner surface of the toner bottle after the test was observed by the above method, and as a result, deformation on the surface of the toner particles was observed and it was confirmed that chemical attack occurred.

**[Table 7]**

| | Molded article | Mixing ratio (mass%) | | Chemical attack |
|---|---|---|---|---|
| | | MR-PET (2-4) | Polycarbodiimide | |
| Comparative Example 1 | Toner bottle (2-4) | 100.0 | 0.0 | Occurred |

While the present invention has been described with reference to exemplary embodiments, it is to be understood that the invention is not limited to the disclosed exemplary embodiments.

## Claims

1. A method for producing a blow-molded article, the method comprising:
a step of producing a preform from a resin mixture comprising at least a wax, a thermoplastic polyester and a carbodiimide compound; and
a step of blow-molding the preform to produce a blow-molded article,
wherein the thermoplastic polyester is at least one selected from the group consisting of polyethylene terephthalate and polyethylene naphthalate,
**characterized in that**
the carbodiimide compound is a polycarbodiimide having 2 or more carbodiimide groups in the molecule, and
wherein a content of the carbodiimide compound in the resin mixture is 227 to 9,096 parts by mass with respect to 100 parts by mass of the wax.

2. The method for producing a blow-molded article according to claim 1,
wherein the wax is an ester wax.

3. The method for producing a blow-molded article according to claim 1 or 2, wherein the blow-molded article is a toner bottle.

4. The method for producing a blow-molded article according to any one of claims 1 to 3,
wherein the blow-molded article is a stretch-blow-molded article.

5. The method for producing a blow-molded article according to claim 4, wherein
the preform has a test tube shape, and
a step of producing the blow-molded article includes:
a step of stretching the preform in a longitudinal direction of the preform by using a stretching rod; and
a step of introducing a gas into the preform stretched in the longitudinal direction and stretching the preform in a circumferential direction.

6. The method for producing a blow-molded article according to any one of claims 1 to 5,
wherein the step of producing a preform includes:
a step of melt-kneading the resin mixture to form pellets; and
a preform molding process of molding the pellets into the preform.

7. The method for producing a blow-molded article according to claim 6,
wherein the preform molding process includes a step of injection molding a melt of the pellets.

8. The method for producing a blow-molded article according to any one of claims 1 to 5,
wherein the step of producing a preform includes:
a step of melt-kneading the wax and the thermoplastic polyester to form first pellets;
a step of melt-kneading the carbodiimide compound and other thermoplastic polyesters to form second pellets; and
a preform molding process to mold a pellet mixture of the first pellets and the second pellets into the preform.

9. The method for producing a blow-molded article according to claim 8,
wherein the preform molding process includes a step of injection molding the melt of the pellet mixture.

10. The method for producing a blow-molded article according to claim 8,
wherein a content of the carbodiimide compound in the second pellets is 1,364 to 9,096 parts by mass with respect to 100 parts by mass of the wax comprised in the first pellets.

## Patentansprüche

1. Verfahren zur Herstellung eines blasgeformten Gegenstands, wobei das Verfahren umfasst:
einen Schritt zum Herstellen eines Vorformlings aus einer Harzmischung, die mindestens ein Wachs, einen thermoplastischen Polyester und eine Carbodiimidverbindung umfasst; und
einen Schritt des Blasformens des Vorformlings zur Herstellung eines blasgeformten Gegenstands,
wobei der thermoplastische Polyester mindestens einer aus der Gruppe bestehend aus Polyethylenterephthalat und Polyethylennaphthalat ist,
**dadurch gekennzeichnet, dass** die Carbodiimidverbindung ein Polycarbodiimid mit zwei oder mehr Carbodiimidgruppen im Molekül ist, und
wobei ein Gehalt der Carbodiimidverbindung in der Harzmischung 227 bis 9096 Massenteile, bezogen auf 100 Massenteile des Wachses, beträgt.

2. Verfahren zur Herstellung eines blasgeformten Gegenstands nach Anspruch 1,
wobei das Wachs ein Esterwachs ist.

3. Verfahren zur Herstellung eines blasgeformten Gegenstands nach Anspruch 1 oder 2,
wobei der blasgeformte Gegenstand eine Tonerflasche ist.

4. Verfahren zur Herstellung eines blasgeformten Gegenstands nach einem der Ansprüche 1 bis 3,
wobei der blasgeformte Gegenstand ein streckblasgeformter Gegenstand ist.

5. Verfahren zur Herstellung eines blasgeformten Gegenstands nach Anspruch 4, wobei
der Vorformling eine Reagenzglasform aufweist und
ein Schritt zur Herstellung des blasgeformten Gegenstands beinhaltet:
einen Schritt zum Strecken des Vorformlings in Längsrichtung des Vorformlings unter Verwendung einer Streckstange; und
einen Schritt des Einleitens eines Gases in den in Längsrichtung gestreckten Vorformling und des Streckens des Vorformlings in Umfangsrichtung.

6. Verfahren zur Herstellung eines blasgeformten Gegenstands nach einem der Ansprüche 1 bis 5, wobei der Schritt der Herstellung eines Vorformlings beinhaltet:
einen Schritt des Schmelzknetens der Harzmischung, um Pellets zu bilden; und
einen Vorformling-Formungsprozess zum Formen der Pellets zu dem Vorformling.

7. Verfahren zur Herstellung eines blasgeformten Gegenstands nach Anspruch 6,
wobei der Vorformling-Formungsprozess einen Schritt des Spritzgießens einer Schmelze der Pellets beinhaltet.

8. Verfahren zur Herstellung eines blasgeformten Gegenstands nach einem der Ansprüche 1 bis 5,
wobei der Schritt des Herstellens eines Vorformlings beinhaltet:
einen Schritt des Schmelzknetens des Wachses und des thermoplastischen Polyesters, um erste Pellets zu bilden;
einen Schritt des Schmelzknetens der Carbodiimidverbindung und anderer thermoplastischer Polyester, um zweite Pellets zu bilden; und
einen Vorformling-Formungsprozess zum Formen einer Pelletmischung aus den ersten Pellets und den zweiten Pellets zu dem Vorformling.

9. Verfahren zur Herstellung eines blasgeformten Gegenstands nach Anspruch 8,
wobei der Vorformling-Formungsprozess einen Schritt des Spritzgießens der Schmelze der Pelletmischung beinhaltet.

10. Verfahren zur Herstellung eines blasgeformten Gegenstands nach Anspruch 8,
wobei ein Gehalt der Carbodiimidverbindung in den zweiten Pellets 1364 bis 9096 Massenteile, bezogen auf 100 Massenteile des in den ersten Pellets enthaltenen Wachses, beträgt.

## Revendications

1. Procédé pour produire un article moulé par soufflage, le procédé comprenant :
une étape de production d'une préforme à partir d'un mélange de résine comprenant au moins une cire, un polyester thermoplastique et un composé carbodiimide ; et
une étape de soufflage de la préforme pour produire un article soufflé,
dans lequel le polyester thermoplastique est au moins l'un choisi dans le groupe consistant en du polyéthylène téréphtalate et du polyéthylène naphtalate,
**caractérisé en ce que** le composé carbodiimide est un polycarbodiimide ayant 2 groupes carbodiimide ou plus dans la molécule, et
dans lequel une teneur du composé carbodiimide dans le mélange de résine est de 227 à 9 096 parties en masse par rapport à 100 parties en masse de la cire.

2. Procédé de production d'un article moulé par soufflage selon la revendication 1,
dans lequel la cire est une cire d'ester.

3. Procédé de production d'un article moulé par soufflage selon la revendication 1 ou 2,
dans lequel l'article moulé par soufflage est un flacon de toner.

4. Procédé de production d'un article moulé par soufflage selon l'une quelconque des revendications 1 à 3,
dans lequel l'article moulé par soufflage est un article moulé par étirement par soufflage.

5. Procédé de production d'un article moulé par soufflage selon la revendication 4, dans lequel
la préforme présente une forme de tube à essai, et
une étape de production de l'article moulé par soufflage comporte :
une étape d'étirage de la préforme dans une direction longitudinale de la préforme à l'aide d'une tige d'étirage ;
et
une étape d'introduction d'un gaz dans la préforme étirée dans la direction longitudinale et d'étirage de la préforme dans une direction circonférentielle.

6. Procédé de production d'un article moulé par soufflage selon l'une quelconque des revendications 1 à 5,
dans lequel l'étape de production d'une préforme inclut :
une étape de fusion-pétrissage du mélange de résine pour former des pastilles ; et
un processus de moulage de préforme consistant à mouler les pastilles dans la préforme.

7. Procédé de production d'un article moulé par soufflage selon la revendication 6,
dans lequel le processus de moulage de préforme inclut une étape de moulage par injection d'une fusion des pastilles.

8. Procédé de production d'un article moulé par soufflage selon l'une quelconque des revendications 1 à 5,
dans lequel l'étape de production d'une préforme inclut :
une étape de fusion-pétrissage de la cire et du polyester thermoplastique pour former des premières pastilles ;
une étape de fusion-pétrissage du composé carbodiimide et d'autres polyesters thermoplastiques pour former des secondes pastilles ; et
un processus de moulage de préforme pour mouler un mélange de pastilles des premières pastilles et des secondes pastilles dans la préforme.

9. Procédé de production d'un article moulé par soufflage selon la revendication 8,
dans lequel le procédé de moulage de préforme inclut une étape de moulage par injection de la fusion du mélange de pastilles.

10. Procédé de production d'un article moulé par soufflage selon la revendication 8,
dans lequel une teneur du composé carbodiimide dans les secondes pastilles est de 1 364 à 9 096 parties en masse par rapport à 100 parties en masse de la cire comprise dans les premières pastilles.
